(19) Europäisches Patentamt
European Patent Office
Office européen des brevets

(11) EP 1 083 153 A1

(12) EUROPEAN PATENT APPLICATION
published in accordance with Art. 158(3) EPC

(43) Date of publication:
**14.03.2001 Bulletin 2001/11**

(21) Application number: **99914753.1**

(22) Date of filing: **14.04.1999**

(51) Int. Cl.$^7$: **C01G 49/00**, C04B 35/26, H01F 1/34, H01P 1/32

(86) International application number:
**PCT/JP99/01996**

(87) International publication number:
**WO 99/54255 (28.10.1999 Gazette 1999/43)**

(84) Designated Contracting States:
**DE FR GB**

(30) Priority: **14.04.1998 JP 10319498**
**26.01.1999 JP 1725499**

(71) Applicant: **TDK Corporation**
**Chuo-ku, Tokyo 103-8272 (JP)**

(72) Inventors:
- **NUKAGA, Masako**
  **Chuo-ku, Tokyo 103-8272 (JP)**
- **SATO, Naoyoshi**
  **Chuo-ku, Tokyo 103-8272 (JP)**
- **HENMI, Sakae**
  **Chuo-ku, Tokyo 103-8272 (JP)**

(74) Representative: **Dealtry, Brian**
**Eric Potter Clarkson,**
**Park View House,**
**58 The Ropewalk**
**Nottingham NG1 5DD (GB)**

# (54) METHOD FOR CONTROLLING INTERMODULATION PRODUCT OF NON-RECIPROCAL CIRCUIT ELEMENT

(57) A non - reciprocal device includes at least one ferrimagnetic member (21 or 22). By controlling the FMR linewidth Δ H of the ferrimagnetic members (21 and 22), intermodulation distortion is controlled.

FIG.10

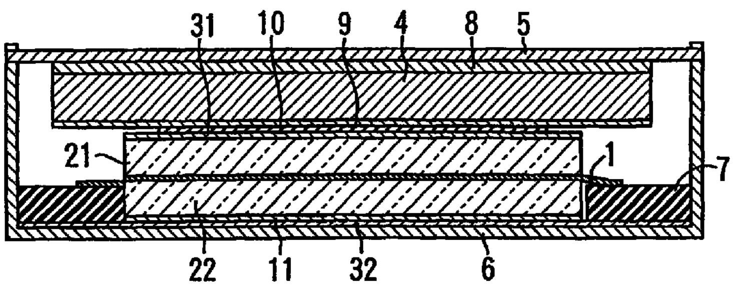


EP 1 083 153 A1

## Description

### TECHNICAL FIELD

The present invention relates to a method of controlling the intermodulation distortion of a non - reciprocal device, a ferrimagnetic material that is ideal for implementation of this method, and a non - reciprocal device employing the ferrimagnetic material.

### BACKGROUND ART

In recent years the Code Division Multiple Access (CDMA) method has been adopted in an increasingly wide range of applications in the area of wireless communications such as cellular phones and personal handy phones throughout the world. With this tendency, intermodulation distortion (hereinafter called IMD) of non - reciprocal devices such as isolators and circulators employed in wireless communication devices that do not require any consideration in the analog communications scheme, have become a critical factor.

IMD represents an undesired signal. which appears when two or more signals are provided to a non - linear device. For instance, when two signals having frequencies ($f_1$) and ($f_2$) are input to a non - reciprocal device at the same time, side bands having frequency components, e.g., frequencies ($2f_1$ - $f_2$) and ($2f_2$ - $f_1$), will emerge. In a non - reciprocal device, the presence of such side bands will cause cross - talk or noise unless the level of the side bands is kept down to a specific value.

The occurrence of IMD can be suppressed by applying a sufficiently strong DC magnetic field to the ferrimagnetic member from a magnet provided at the non - reciprocal device. However, as a side effect of such an application of a DC magnetic field, the operating band moves toward the high frequency side and, at the same time, the operating band becomes narrower, resulting in poor performance of the non - reciprocal device. In addition, the need for a more compact and thinner non - reciprocal device presents a conflict in that a sufficiently strong DC magnetic field cannot be applied in a more compact and thinner non - reciprocal device.

Furthermore, since a compact, wireless communication device such as a cellular phone is battery - powered, it is a prerequisite that a device achieving low loss be employed for operation over an extended period of time. Low loss characteristics are likewise required of a non - reciprocal device that is mounted in such an apparatus. Since the area to be covered by the base station is small, an amplifier requiring low power is employed, which results in low loss characteristics required of the non - reciprocal device. Also, since the area to be covered by the terminal station is small, an amplifier requiring low power is employed, which results in low loss characteristics required of the non - reciprocal device.

Moreover, the critical characteristics required of the ferrimagnetic material employed to constitute the non - reciprocal device include a sufficiently low ferromagnetic resonance linewidth (hereinafter called 'FMR linewidth' and represented as $\Delta$ H), which constitutes a magnetic loss term and the value representing the saturation magnetization 4 $\pi$ Ms at room temperature that can be freely selected through a single series in correspondence to the operating frequency of the non - reciprocal device.

In addition, since the ferrimagnetic material is used in combination with the magnet in the non - reciprocal device, it is ideal that the saturation magnetization 4 $\pi$ Ms has a temperature coefficient that compensates for the temperature characteristics of the magnet. There is a close correlation between the temperature coefficient of the saturation magnetization 4 $\pi$ Ms and the Curie Temperature Tc, and normally it is desirable that a high Curie Temperature Tc is achieved in correspondence to the magnet whose temperature does not change greatly.

Japanese Patent Publication No. 31288/1981 (Kokoku 56 - 31288) discloses a technique whereby the value representing the saturation magnetization 4 $\pi$ Ms of the Y - CaV - Fe garnet ferrite displaced by (In) and (Al) is freely adjusted by varying the compositional ratio.

However, the material described above presents a problem in practical application in that since its Curie Temperature Tc is low, at or below 160 °C, the non - reciprocal device must be used under restricted temperature conditions. In addition, since (In) is a rare resource, the ferrite achieved by using (In) is bound to be expensive.

### DISCLOSURE OF THE INVENTION

It is an object of the present invention to provide a method for intermodulation distortion control through which intermodulation distortion (hereinafter called IMD) can be reduced even when a sufficiently strong DC magnetic field cannot be applied, a ferrimagnetic material that is ideal for the implementation of the method and a non - reciprocal device employing the ferrimagnetic material.

It is a further object of the present invention to provide a method for IMD control that effectively achieves a more compact and thinner non - reciprocal device, a ferrimagnetic material that is ideal for the implementation of this method and a non - reciprocal device employing the ferrimagnetic material.

It is a still further object of the present invention to provide an inexpensive ferrimagnetic material achieving outstanding temperature characteristics and a non - reciprocal device employing the ferrimagnetic material.

In order to achieve the objects described above, according to the present invention, the ferromagnetic resonance linewidth (hereinafter called 'FMR linewidth' and represented as $\Delta$ H) of the ferrimagnetic member included in a non - reciprocal device is controlled in order to control IMD of the non - reciprocal device. Through this method, IMD is controlled. By adopting this method of control, IMD can be improved even when a sufficiently strong DC magnetic field cannot be applied. As a result, it is possible to meet the need for a more compact and thinner non - reciprocal device in a satisfactory manner.

The non - reciprocal device includes a ferrimagnetic member and a magnet that applies a DC magnetic field to the ferrimagnetic member. FIG. 1 illustrates the relationship between the intensity of the DC magnetic field applied by the magnet and IMD. As illustrated in FIG. 1, as the intensity of the DC magnetic field applied to the ferrimagnetic member increases, IMD is reduced. Thus, by applying a sufficiently strong DC magnetic field to the ferrimagnetic member, the occurrence of IMD can be suppressed.

The inventors of the present invention have deduced that IMD becomes reduced as the intensity of the DC magnetic field applied by the magnet to the ferrimagnetic member increases, since the strong DC magnetic field overcomes the influence of the demagnetizing field at the pores within the ferrimagnetic member and in the vicinity of the out - of - phase component of the crystal magnetic anisotropy so that the precession of spin within the magnetic substance achieves a true circular movement in a uniform direction, and have also deduced that IMD increases as the intensity of the magnetic field decreases, since a reduced intensity in the DC magnetic field produces a corresponding reduction in the force with which the spin direction is controlled. With this, the influence of the demagnetizing fields and of the crystal magnetic anisotropy and the like becomes more pronounced, to cause the locus of the precession of spin to trace a distorted circular movement. Through such distorted circular movement, the high frequency magnetic field that has been input and the high frequency magnetization occurring as a result of the ferromagnetic resonance phenomenon achieve a nonlinear relationship.

However, in reality, a sufficiently strong DC magnetic field cannot be applied due to the consideration of the operating performance of the non - reciprocal device which would then be reduced and in consideration of the need for achieving miniaturization and a lower profile.

As a means for eliminating this problem, IMD is controlled by controlling the FMR linewidth $\Delta$ H of the ferrimagnetic member included in the non - reciprocal device, according to the present invention.

If the precession of spin is caused to become distorted by the influence of the demagnetizing fields at the pores and in the vicinity of the out - of - phase component, the influence of magnetic anisotropy and the like to induce occurrence of IMD, the FMR linewidth $\Delta$ H may be regarded as a material constant related to IMD, since the FMR linewidth $\Delta$ H is subject to the influences described above as an indicator of the magnetic loss component and it is difficult to measure the extent to which the demagnetizing fields at the pores and in the vicinity of out - of - phase component and the magnetic anisotropy affect the precession of spin. Generally, the FMR linewidth $\Delta$ H of a polycrystal may be expressed as below.

$$\Delta H = \Delta Hi + \Delta Hp + \Delta Ha \quad (1)$$

where,

- $\Delta$ Hi represents the linewidth of a single crystal having an identical composition;
- $\Delta$ Hp represents an increment contributed from a non - magnetic phase present in a sample; and
- $\Delta$ Ha represents an increment contributed from crystalline magnetic anisotropy.

The FMR linewidth $\Delta$ Hi of a single crystal is said to be 0.5 (Oe), and may be disregarded when discussing the FMR linewidth of the polycrystal. Thus, the increment $\Delta$ Hp and the increment $\Delta$ Ha are discussed below.

⟨Influence of the demagnetizing fields around pores⟩

In regard to the increment $\Delta$ Hp, the following equation (2) was drawn by E. Shlomann.

$$\Delta Hp = 1.47\ (4 \pi Ms)\ p \quad (2)$$

where, p represents porosity.

FIG. 2 illustrates the relationship between the porosity (p) and the FMR linewidth $\Delta$ H in Y - Al - Fe garnet ferrite (Y - Al - IG). Since the FMR linewidth $\Delta$ H is ($\Delta$ Hi + $\Delta$ Ha) when the porosity is 0 %, the increment $\Delta$ Hp is

expressed as the difference between a cut piece and Δ Hi + Δ Ha.

FIG. 3 illustrates the relationship between the increment Δ Hp and IMD. In order to measure IMD, a distributed parameter isolator was employed, and two signals, i.e., a signal having a frequency of 1960.0 MHz and a signal having a frequency of 1960.1 MHz were input to the isolator. The input power achieved 36 dBm per wave. Y - Al - Fe garnet ferrite (Y - Al - IG) was employed to constitute the ferrimagnetic member included in the isolator.

As illustrated in FIG. 3, IMD increases or decreases almost linearly as the increment Δ Hp increases or decreases. In other words, by controlling the increment Δ Hp, IMD can be controlled.

The following deduction may be drawn in regard to the occurrence of IMD due to pores. Namely, when a DC magnetic field is applied from the outside, demagnetizing fields occur around the pores, which then causes the precession of spin to draw a distorted circle. Through such a rotating movement, a non - linear relationship is achieved between the high frequency magnetic field that has been input and the high frequency magnetization occurring as a result of the ferromagnetic resonance phenomenon.

⟨Increment Δ Ha⟩

The increment Δ Ha is expressed as:

$$\Delta Ha \propto (K) / (Ms) \quad (3)$$

where,

K represents the crystalline magnetic anisotropy constant, and
Ms represents the value of the saturation magnetization.

Table I presents individual characteristics values of (Y - CaV - Zr) displaced iron garnet ferrite that are obtained by varying the quantity of (Zr) displacement with the saturation magnetization in the vicinity of 1250 Gauss.

Table I

| composition | 4πMs (Gauss) | curie-point (°C) | porosity (%) | ΔH (0e) |
|---|---|---|---|---|
| $Y_{2.42}Ca_{0.6}Fe_{4.68}V_{0.3}0_{12}$ | 1243 | 278 | 0.3 | 34 |
| $Y_{2.3}Ca_{0.72}Fe_{4.59}V_{0.33}Zr_{0.06}0_{12}$ | 1252 | 264 | 0.3 | 30 |
| $Y_{2.22}Ca_{0.8}Fe_{4.53}V_{0.35}Zr_{0.1}0_{12}$ | 1214 | 259 | 0.3 | 20 |
| $Y_{2.06}Ca_{0.96}Fe_{4.4}V_{0.38}Zr_{0.2}0_{12}$ | 1215 | 233 | 0.3 | 10 or less |

Machida et al. have reported that substitution with (Zr) is effective for reducing magnetic anisotropy. In Table I, the samples achieve saturation magnetization and porosity values almost equal to one another. Using the above - mentioned equation (2), the increment Δ Hp is calculated to be equal among the various samples at approximately 6 (Oe) when the porosity is 0.3 % and the saturation magnetization is 1250 Gauss. Consequently, the differences in the FMR linewidth Δ H among the individual samples as seen in Table I may be attributed to different Δ Ha terms resulting from the change in the magnetic anisotropy caused by varying (Zr) displacement quantities.

FIG. 4 is a characteristics diagram illustrating the power dependency of IMD in samples with varying Δ Ha. In order to measure IMD, a lumped parameter isolator was employed, and two signals, i.e., a signal having an input frequency of 960.0 MHz and a signal having an input frequency of 960.1 (MHz) were input. The input power is indicated as a value per wave. As Δ Ha increases, i.e., as the crystal magnetic anisotropy increases in the sample, a larger IMD is generated over the full power range. In addition, a sample with a smaller degree of anisotropy is more sensitive to changes in the power level and demonstrates a higher degree of dependency on power. In other words, while a sample with a small degree of artisotropy demonstrates outstanding IMD characteristics on the low power side, its IMD will deteriorate rapidly once the power exceeds the measuring power range, which presents a concern that the extent of such a deterioration of IMD may exceed the extent of deterioration of the characteristics of samples with a high degree of anisotropy. This means that by changing constituents of the ferrimagnetic member and controlling the degree of its magnetic anisotropy, the increment Δ Ha can be changed to achieve control of IMD.

The following deduction may be made in regard to the relationship between the increment Δ Ha and IMD. Namely, when a signal at low power is input, the magnetic anisotropy causes the precession of spin to become distorted as do the magnetizing fields around the pores. As a result, an isolator constituted by using a material with a lesser degree of anisotropy demonstrates superior IMD characteristics in the low power range. However, as the input power increases, the amplitude of the precession of spin increases to induce interaction between adjacent spins to excite a spin wave. This interferes with uniform precession of the spin overall, which may result in nonlinear characteristics. The excitation of spin waves is thought to occur more readily in a material with a small degree of anisotropy and a low curie point, and the test results indicating that a material with a smaller degree of anisotropy demonstrates a higher degree of dependency on power are assumed to reflect this phenomenon.

As explained above, by controlling the porosity and the magnetic anisotropy of the ferrimagnetic member, IMD can be controlled. In other words, IMD can be reduced by reducing the material constant FMR linewidth $\Delta$ H, i.e., by reducing the porosity or the magnetic anisotropy of the ferrimagnetic member.

Since, of the porosity and the magnetic anisotropy that affect the magnetic resonance linewidth $\Delta$ H, the magnetic anisotropy is determined by the material characteristics of the ferrimagnetic member, the FMR linewidth $\Delta$ H can be controlled by adjusting the composition of the ferrimagnetic member to control IMD.

Next, the composition of the ferrimagnetic member that is suited for suppressing the generation of IMD is explained. Such a ferrimagnetic member is constituted of Y - iron garnet ferrite having a composition expressed by the following general formula:

$$(Y_{3-2x-z+w}Ca_{2x+z})(Fe_{5-x-y-z-w}V_xAl_yZr_z)O_{12}$$

where,

$$0 \leqq x \leqq 0.7,\ 0 \leqq y \leqq 0.7,\ 0.05 \leqq z \leqq 0.3 \text{ and } 0.01 \leqq w \leqq 0.03.$$

The ferrimagnetic material having the composition described above has a FMR linewidth $\Delta$ H which is smaller than 15 (Oe), and effectively suppresses the occurrence of IMD. In addition, the value representing the saturation magnetization 4 $\pi$ Ms can be freely adjusted, and a relatively high Curie Temperature Tc is achieved. Over the range in which the FMR linewidth $\Delta$ H is smaller than 15 (Oe), the IMD can be reduced to 75 (dBc) or less which presents no problem in the operation of an isolator.

The thermal stability of magnetism represented by the Curie Temperature Tc and the reduction of the FMR linewidth $\Delta$ H which constitutes the magnetic loss term are normally regarded as conflicting requirements. By using the material having the composition described above according to the present invention, these two requirements can be satisfied at the same time at the level of practical application by achieving a balance between the Curie Temperature Tc and the FMR linewidth $\Delta$ H that are normally in a conflicting relationship as explained above.

(Zr) in the general expression above demonstrates characteristics very much like those of (In) and is inexpensive by comparison. In addition, through combined displacement of (V), (Al) and (Zr), the displacement ratio that compensates for advantages and disadvantages that result from the displacement of each element can be selected so that both the loss characteristics and the temperature characteristics can be set at desirable values.

Furthermore, within the range of the (w) term in the chemical expression above, a dense crystalline body with a particle diameter of 15 μm or more that only has a garnet structure was obtained. It is not desirable to deviate from the range defined for the (w) term since a phase other than the garnet phase is formed.

In addition, the relationship between the displacement quantities of (V), (Al) and (Zr) that are used as displacement elements and the saturation magnetization 4 $\pi$ Ms at room temperature can be roughly deduced through the following empirical formula (± 7 % within the range of $0 \leqq z \leqq 0.3$).

$$4\pi Ms = 1780 - 1750 - 1400_y + 1000_z - 1200_z^{\ 2}$$

Thus, based upon the relationship between the displacement quantities of the individual displacement elements and the saturation magnetization 4 $\pi$ Ms, the material characteristics of compositions having similar degrees of saturation magnetization 4 $\pi$ Ms can be compared with one another.

BRIEF DESCRIPTION OF THE DRAWINGS

Other objects, structural features and advantages of the present invention are explained in further detail by referring to the attached drawings that illustrate preferred embodiments.

FIG. 1 illustrates the relationship between the intensity of the DC magnetic field applied by a magnet and the intermodulation distortion in a non - reciprocal device ;
FIG. 2 illustrates the relationship between the porosity and the FMR linewidth $\Delta$ H in Y - Al - Fe garnet ferrite ;
FIG. 3 illustrates the relationship between the increment $\Delta$ Hp attributable to pores and the IMD ;

FIG. 4 is a characteristics diagram illustrating the power dependency of the IMD in samples achieved by varying the (Zr) displacement quantity ;

FIG. 5 shows data illustrating the relationship between temperature change and insertion loss in isolators ;

FIG. 6 illustrates the power dependency of the IMD in isolators ;

FIG. 7 shows another set of data illustrating the relationship between the temperature change and the insertion loss in isolators ;

FIG. 8 shows data illustrating the power dependency of the IMD in isolators ;

FIG. 9 is a perspective of the non - reciprocal device according to the present invention in a disassembled state ;

FIG. 10 is a sectional view of the non - reciprocal device illustrated in FIG. 9 ; and

FIG. 11 is an equivalent circuit diagram illustrating the operating state of the isolator shown in FIGS. 9 and 10.

BEST MODE FOR CARRYING OUT THE INVENTION

Example 1

Base materials ($Y_2O_3$), ($CaCO_3$), ($Fe_2O_3$), ($ZrO_2$), ($V_2O_5$) and (Al) (OH) $_3$ were sintered, then weighed to achieve a target composition of

$$(Y_{3-2x-z+w}Ca_{2x+z})(Fe_{5-x-y-z-w}V_xAl_yZr_z)O_{12}$$

and were wet - mixed in a ball mill for 20 hours. The mixture was then calcined in air for 4 hours at 1100°C to 1200 °C to obtain a calcined material. The calcined material was placed in a ball mill again, and after it was subjected to wet - grinding for 20 hours, it underwent the process of compression molding. The moldings thus achieved were baked for 6 hours within an oxygen atmosphere at optimal temperatures selected within the range of 1250°C to 1450 °C to ensure that the minimum FMR linewidth Δ H and a particle diameter of 15 μm or larger are achieved for each composition. Through x - ray diffraction, the sintered substances obtained through this process were each constituted of single - phase garnet.

The FMR linewidth Δ H was measured by employing the Reflection Method at 10 (GHz) by preparing a ball sample having a diameter of 1.0mm through the Bond Method from a fragment of each sintered sample. In addition, the saturation magnetization 4 π Ms and the Curie Temperature Tc were measured using a Vibrating Magnetometer. The results obtained with compositions with the saturation magnetization 4 π Ms in the vicinity of 1250 Gauss based upon the empirical formula mentioned earlier are presented in Table II. In Table II, Nos. 1 to 18 indicate the number assigned to the sintered samples that underwent the measurement. It is to be noted that (w) was set within a range of $0.01 \leqq w \leqq 0.03$.

Table II

| No. | x | y | z | x+y | 4πMs(G) | Tc(°C) | ΔH(0e) |
|---|---|---|---|---|---|---|---|
| 1 | 0 | 0.38 | 0 | 0.38 | 1230 | 224 | 45 |
| 2 | 0.1 | 0.3 | 0.5 | 0.4 | 1280 | 62 | <15 |
| 3 | 0 | 0.5 | 0.4 | 0.5 | 1235 | 141 | <15 |
| 4 | 0.12 | 0.38 | 0.4 | 0.4 | 1230 | 148 | <15 |
| 5 | 0.24 | 0.25 | 0.4 | 0.49 | 1230 | 156 | <15 |
| 6 | 0.35 | 0.13 | 0.4 | 0.48 | 1219 | 163 | <15 |
| 7 | 0.47 | 0 | 0.4 | 0.47 | 1220 | 169 | <15 |
| 8 | 0.1 | 0.3 | 0.3 | 0.4 | 1220 | 180 | <15 |
| 9 | 0 | 0.44 | 0.2 | 0.44 | 1280 | 191 | <15 |
| 10 | 0.1 | 0.33 | 0.2 | 0.43 | 1286 | 199 | <15 |
| 11 | 0.21 | 0.22 | 0.2 | 0.43 | 1279 | 207 | <15 |
| 12 | 0. 31 | 0.11 | 0.2 | 0.42 | 1275 | 217 | <15 |
| 13 | 0.42 | 0 | 0.2 | 0.42 | 1269 | 225 | <15 |

Table II (continued)

| No. | x | y | z | x+y | 4πMs(G) | Tc(°C) | ΔH(0e) |
|---|---|---|---|---|---|---|---|
| 14 | 0 | 0.4 | 0.08 | 0.4 | 1250 | 223 | <15 |
| 15 | 0.09 | 0.3 | 0.08 | 0.39 | 1238 | 233 | <15 |
| 16 | 0.19 | 0.2 | 0.08 | 0.39 | 1230 | 239 | <15 |
| 17 | 0.29 | 0.1 | 0.08 | 0.39 | 1215 | 252 | <15 |
| 18 | 0.38 | 0 | 0.08 | 0.38 | 1210 | 259 | <15 |

Material No. 1 is a Y - Al - Fe garnet ferrite material in the prior art having a saturation magnetization 4 π Ms of about 1250 Gauss. Each of materials No. 2 to No. 18 too, achieve saturation magnetization 4 π Ms values in the vicinity of 1250 Gauss.

While the FMR linewidth Δ H, which is related to the IMD is 45 (Oe) in material No. 1, the values of the FMR linewidth Δ H in material Nos. 2 to 18 are smaller than 15 (Oe). Thus, where the IMD is concerned, materials Nos. 2 to 18 all show an improvement over No. 1 representing a product of the prior art.

In regard to the Curie Temperature Tc which is related to the temperature characteristics, while material No. 1 has a Curie Temperature Tc of 224°C, material Nos. 2 to 8 only achieve values that are considerably lower. Roughly speaking, the Curie Temperature becomes lower as the (Zr) displacement quantity increases. In addition, when the displacement quantity for (Zr) is constant, the Curie Temperature Tc goes up as the ratio of the (V) displacement quantity increases against the (Al) displacement quantity.

In comparison with material No. 1, which represents a product of the prior art, the composition that suppresses the IMD and at the same time achieves an improvement in the temperature characteristics may be defined as that satisfying:

$$0.08 \leqq z \leqq 0.2$$

$$0 \leqq x \leqq 0.42 \text{ and}$$

$$0 \leqq y \leqq 0.44.$$

In this composition, it is desirable to set (x) and (y) so that (x + y) falls within the range of 0.38 to 0.44.

Example 2

Sintered samples were prepared through a process similar to that employed in example 1 to examine compositions having a saturation magnetization 4 π Ms in the vicinity of 1750 Gauss, and their characteristics were measured. The results obtained through the measurement are presented in Table III. In Table III, material Nos. 21 to 26 indicate numbers assigned to sintered samples that underwent the measurement. Material No. 21 is Y - iron garnet ferrite of the prior art that did not undergo any displacement.

While the FMR linewidth Δ H, which is related to the IMD is 45 (Oe) in material No. 21, the values of the FMR linewidth Δ H in material Nos. 22 to 26 are smaller than 15 (Oe). Thus, where the IMD is concerned, material Nos. 22 to 26 all show an improvement over material No. 21 representing a product of the prior art.

In regard to the Curie Temperature Tc, while material No. 21 has a Curie Temperature Tc of 275 °C, material Nos. 22 to 26 only achieve values that are considerably lower. Among material Nos. 22 to 26, material Nos. 22 and 26, though, achieve a Curie Temperature Tc of 261 °C, which is a value comparable to that achieved by material No 21.

To summarize the data presented in Table III, the composition of an optimal example that achieves an effect of suppressing the IMD and at the same time achieves comparable temperature characteristics in comparison with material No. 21 of the prior art should satisfy:

$$z = 0.1$$

$$0 \leqq x \leqq 0.1 \text{ and}$$

$$0 \leqq y \leqq 0.1$$

It is desirable to set (x) and (y) so that (x + y) falls within the range of 0.05 to 0.06.

Table III

| No | x | y | z | x+y | 4πMs(G) | Tc(°C) | ΔH(0e) |
|---|---|---|---|---|---|---|---|
| 21 | 0 | 0 | 0 | 0 | 1780 | 275 | 25 |
| 22 | 0.05 | 0 | 0.1 | 0.05 | 1740 | 261 | <15 |
| 23 | 0.12 | 0 | 0.2 | 0.12 | 1700 | 238 | <15 |
| 24 | 0.14 | 0 | 0.3 | 0.14 | 1720 | 215 | <15 |
| 25 | 0.15 | 0 | 0.4 | 0.15 | 1715 | 196 | <15 |
| 26 | 0 | 0.06 | 0.1 | 0.06 | 1800 | 261 | <15 |

Example 3

Sintered samples were prepared through a process similar to that employed in example 1 to examine compositions having a saturation magnetization 4 π Ms in the vicinity of 750 Gauss, and their characteristics were measured. The results obtained through the measurement are presented in Table IV. Material No. 31 is a Y - Al - Fe garnet ferrite material of the prior art, having a saturation magnetization 4 π Ms of 750 Gauss. Material No. 32 to 36, too, achieve saturation magnetization 4 π Ms of about 750 Gauss.

While the FMR linewidth Δ H, which affects the IMD, of material No. 31 is 30 (Oe), material No. 33 achieves a value less than 15 (Oe) and material Nos. 38 to 43 achieve values equal to or less than 15 (Oe).

In addition, while material No. 31 as a Curie Temperature Tc of 175°C, the corresponding value for material No. 34 is 179 °C and those of material Nos. 40 to 42 are within a range of 177°C to 196 °C, which are higher than 175 °C.

Thus, when the saturation magnetization 4 π Ms is in the vicinity of 750 Gauss, the composition that achieves an effect of suppressing the IMD and, at the same time, achieves comparable temperature characteristics in comparison with material No. 31 should satisfy

$$0.2 \leqq z \leqq 0.3$$

$$0.3 \leqq x \leqq 0.7 \text{ and}$$

$$0 \leqq y \leqq 0.42.$$

It is particularly desirable to set (x) and (y) so that (x + y) falls within the range of 0.70 to 0.75.

Table IV

| No. | x | y | z | x+y | 4πMs(G) | Tc(°C) | ΔH(0e) |
|---|---|---|---|---|---|---|---|
| 31 | 0 | 0.68 | 0 | 0.68 | 750 | 175 | 30 |
| 32 | 0.59 | 0 | 0 | 0.59 | 765 | 273 | 60 |
| 33 | 0 | 0.79 | 0.1 | 0.19 | 765 | 164 | <15 |
| 34 | 0.16 | 0.59 | 0.1 | 0.75 | 760 | 179 | 18 |
| 35 | 0.32 | 0.39 | 0.1 | 0.71 | 755 | 207 | 30 |
| 36 | 0.48 | 0.19 | 0.1 | 0.67 | 758 | 226 | 39 |
| 37 | 0.63 | 0 | 0.1 | 0.63 | 740 | 246 | 45 |
| 38 | 0 | 0.84 | 0.2 | 0.84 | 760 | 135 | <15 |
| 39 | 0.17 | 0.63 | 0.2 | 0.80 | 770 | 155 | <15 |
| 40 | 0.33 | 0.42 | 0.2 | 0.75 | 780 | 177 | <15 |

Table IV (continued)

| No. | x | y | z | x+y | 4πMs(G) | Tc(°C) | ΔH(0e) |
|---|---|---|---|---|---|---|---|
| 41 | 0.5 | 0.21 | 0.2 | 0.71 | 775 | 196 | 15 |
| 42 | 0.70 | 0 | 0.3 | 0.70 | 740 | 188 | <15 |
| 43 | 0.71 | 0 | 0.4 | 0.71 | 752 | 159 | <15 |

Example 4

Now, an example of application in which a ferrimagnetic material according to the present invention having a composition of $(Y_{2.58}Ca_{0.46})$ $(Fe_{4.49}V_{0.19}Zr_{0.08}Al_{0.2})O_{12}$ (x = 0.19), (y = 0.2), (z = 0.08), (w = 0.02) was used to constitute an isolator is explained. The characteristics of the ferrimagnetic material having the composition described above were such that its saturation magnetization 4 π Ms was 1230 Gauss, the Curie Temperature Tc was at 239 °C and the FMR linewidth Δ H was equal to or lower than 15 (Oe). Using this material to constitute a substrate, a 1.9 (GHz) band distributed constant isolator A was manufactured.

For purposes of comparison, an isolator B was produced using a Y - Al - Fe garnet ferrite material of the prior art. The characteristics of this Y - Al - Fe garnet ferrite material included a saturation magnetization 4 π Ms of 1250 Gauss, a Curie Temperature Tc of 240 °C and a FMR linewidth Δ H of 45 (Oe).

FIG. 5 presents data that illustrate the relationship between temperature change in the isolators A and B and insertion loss. The curve A1 represents the insertion loss characteristics of the isolator A according to the present invention, whereas the curve B1 represents the characteristics of the isolator B of the prior art.

As FIG. 5 clearly illustrates, the isolator A according to the present invention achieves a lower insertion loss compared to the isolator B of the prior art, demonstrating superior temperature characteristics over the entire temperature range, under the same temperature conditions.

FIG. 6 illustrates the relationship between the IMD and the input power per signal achieved by the isolators A and B. The curve A2 represents the IMD characteristics achieved by the isolator A according to the present invention, whereas the curve B2 represents the IMD characteristics of the isolator B of the prior art. As FIG. 6 clearly illustrates, at the same input power, the isolator A according to the present invention achieves an IMD which is lower than that of the isolator B of the prior art by 17 to 18 (dBc). Moreover, the IMD is suppressed at an extremely low value of approximately -80 (dBc) in the isolator A according to the present invention.

Example 5

Now, an example of application in which a ferrimagnetic material according to the present invention having a composition of $(Y_{2.82}Ca_{0.2})$ $(Fe_{4.83}V_{0.05}Zr_{0.1})$ $O_{12}$ (x = 0.05), (y = 0), (z = 0.1), (w = 0.02), was used to constitute an isolator is explained.

The characteristics of this ferrimagnetic material were such that its saturation magnetization 4 π Ms was 1740 Gauss, the Curie Temperature Tc was at 260 °C and the FMR linewidth Δ H was equal to or lower than 15 (Oe). This ferrimagnetic material was employed to produce a 2.0 (GHz) band distributed constant isolator C.

For purposes of comparison, an isolator D was produced using a Y - iron garnet ferrite material with no displacement. The characteristics of this Y - iron garnet ferrite material included a saturation magnetization 4 π Ms of 1770 Gauss, a Curie Temperature Tc of 287 °C and a FMR linewidth Δ H of 23 (Oe).

FIG. 7 presents data that illustrate the relationship between temperature change in the isolators C and D and insertion loss. The curve C1 represents the insertion loss characteristics of the isolator C according to the present invention, whereas the curve D1 represents the characteristics of the isolator D of the prior art. As FIG. 7 clearly illustrates, the isolator C according to the present invention achieves a lower insertion loss compared to the isolator D of the prior art over a temperature range equal to or higher than - 20 °C under the same temperature conditions.

FIG. 8 illustrates the relationship between the IMD and the input power per signal achieved by the isolators C and D. The curve C2 represents the IMD characteristics achieved by the isolator C according to the present invention, whereas the curve D2 represents the IMD characteristics of the isolator D of the prior art.

As FIG. 8 clearly illustrates, at the same input power, the isolator C according to the present invention achieves an IMD which is lower than that of the isolator D of the prior art by 8 to 10 (dBc). Moreover, the IMD is suppressed at an extremely low value of approximately -76 to -78 (dBc) in the isolator C according to the present invention.

FIG. 9 is a perspective of the non - reciprocal device in a disassembled state and FIG. 10 is a sectional view of the non - reciprocal device illustrated in FIG. 9. The non - reciprocal device in the figures, which is a distributed constant isolator, includes a central conductor 1, a magnet 4 and ferrimagnetic members 21 and 22. The ferrimagnetic members 21 and 22 are constituted of the material according to the present invention. While two ferrimagnetic members 21 and 22 are provided above and below the central conductor 1, the non - reciprocal device may be provided with only one ferrimagnetic member.

The magnet 4 applies a DC magnetic field to the ferrimagnetic members 21 and 22 and the strip conductor 1. There may be two magnets 4 to be provided to the sides of the ferrimagnetic members 21 and 22. Yokes 5 and 6 are magnetically coupled with the magnet 4. In the example illustrated in the figures, the yokes 5 and 6 also function as an external casing that covers the ferrimagnetic members 21 and 22, the central conductor 1, earth conductors 31 and 32 and the magnet 4.

A substrate 7 is provided with a capacitor, a resistor and the like that are required for the non - reciprocal device to operate. The substrate 7 is provided with a hole 71 in which the ferrimagnetic member 22 is provided. Reference number 8 indicates a magnetic shunt plate, reference numbers 9 and 11 indicate magnetic pole plates and reference number 10 indicates a spacer. While a distributed constant type non - reciprocal circuit is provided in the example, the present invention may be adopted in a lumped constant type or substrate type non - reciprocal device. Since specific structures to be assumed for such non - reciprocal devices are known to persons skilled in the art, illustrations thereof are omitted.

FIG. 11 is an equivalent circuit diagram illustrating the operating state of the isolator shown in FIGS. 9 and 10. A circuit constituted by connecting a capacity C11 between terminals (a) and (b), connecting a capacity C12 between terminals (b) and (c), connecting a capacity C13 between the terminals (c) and (a) arid connecting ground capacitors C01, C02 and C03 to the terminals (a), (b) and (c) respectively is achieved.

The non - reciprocal device illustrated in FIGS. 9 to 11 represents only one example in which the present invention may be adopted. The present invention may be adopted in various types of non - reciprocal devices such as isolators and circulators to lower their IMD and improve their temperature characteristics.

As has been explained, according to the present invention, the following advantages are achieved.

(a) A method of control whereby the intermodulation distortion can be kept down to a low value even when a sufficiently strong DC magnetic field cannot be applied, a ferrimagnetic material that is ideal for the implementation of this method and a non - reciprocal device using the ferrimagnetic material are provided.

(b) A method of intermodulation distortion control that effectively achieves a smaller, thinner non - reciprocal device, a ferrimagnetic material that is ideal for the implementation of this method and a non - reciprocal device using the ferrimagnetic material are provided.

(c) An inexpensive ferrimagnetic material that demonstrates outstanding temperature characteristics and a non - reciprocal device using the ferrimagnetic material are provided.

## Claims

**1.** A method for controlling the intermodulation distortion of a non - reciprocal device having at least one ferrimagnetic member, wherein:

said intermodulation distortion is controlled by controlling a ferromagnetic resonance linewidth of said ferrimagnetic member.

**2.** The method of claim 1, wherein:

said ferromagnetic resonance linewidth is controlled by controlling the porosity of said ferrimagnetic member.

**3.** The method of claim 1, wherein:

said ferromagnetic resonance linewidth is controlled by controlling the magnetic anisotropy of said ferrimagnetic member.

**4.** The method of claims 1 through 3, wherein:

said ferromagnetic resonance linewidth is set at a value smaller than 15 (Oe).

**5.** The method of claims 1 or 2, wherein:

the absolute value of said intermodulation distortion is controlled to be equal to or greater than 75 (dBc).

**6.** The method of claims 1 through 5, wherein:

said ferrimagnetic member has a composition generally expressed as:

$$(Y_{3-2x-z+w}Ca_{2x+z})(Fe_{5-x-y-z-w}V_xAl_yZr_z)O_{12}$$

with the values represented by (x), (y), (z) and (w) respectively satisfying:

$$0 \leqq x \leqq 0.7$$

$$0 < y \leqq 0.7$$

$$0.05 \leqq z \leqq 0.3 \text{ and}$$

$$0.01 \leqq w \leqq 0.03.$$

**7.** The method of claim 6, wherein:

when the value representing saturation magnetization 4 π Ms is in the vicinity of 1250 Gauss,

$$0 \leqq x \leqq 0.42$$

$$0 \leqq y \leqq 0.44 \text{ and}$$

$$0.08 \leqq z \leqq 0.2 \text{ are satisfied.}$$

**8.** The method of claim 6, wherein:

when the value representing saturation magnetization 4 π Ms is in the vicinity of 1750 Gauss,

$$0 \leqq x \leqq 0.1$$

$$0 \leqq y \leqq 0.1 \text{ and}$$

$$z = 0.1 \text{ are satisfied.}$$

**9.** The method of claim 6, wherein:

when the value representing saturation magnetization 4 π Ms is in the vicinity of 750 Gauss,

$$0.3 \leqq x \leqq 0.7$$

$$0 \leqq y \leqq 0.42 \text{ and}$$

$$0.2 \leqq z \leqq 0.3 \text{ are satisfied.}$$

**10.** A ferrimagnetic material having a composition expressed by a general expression:

$$(Y_{3-2x-z+w}Ca_{2x+z})(Fe_{5-x-y-z-w}V_xAl_yZr_z)O_{12}$$

with values represented by (x), (y), (z) and (w) respectively satisfying:

$$0 \leqq x \leqq 0.7$$

$$0 \leqq y \leqq 0.7$$

$$0.05 \leqq z \leqq 0.3 \text{ and}$$

$$0.01 \leqq w \leqq 0.03.$$

**11.** The ferrimagnetic material of claim 10, wherein:

when the value representing saturation magnetization 4 $\pi$ Ms is in the vicinity of 1250 Gauss,

$$0 \leqq x \leqq 0.42$$

$$0 \leqq y \leqq 0.44 \text{ and}$$

$$0.08 \leqq z \leqq 0.2 \text{ are satisfied.}$$

**12.** The ferrimagnetic material of claim 10, wherein:

when the value representing saturation magnetization 4 $\pi$ Ms is in the vicinity of 1750 Gauss,

$$0 \leqq x \leqq 0.1$$

$$0 \leqq y \leqq 0.1 \text{ and}$$

$$z = 0.1 \text{ are satisfied.}$$

**13.** The ferrimagnetic material of claim 10, wherein:

when the value representing saturation magnetization 4 $\pi$ Ms is in the vicinity of 750 Gauss,

$$0.3 \leqq x \leqq 0.7$$

$$0 \leqq y \leqq 0.42 \text{ and}$$

$$0.2 \leqq z \leqq 0.3 \text{ are satisfied.}$$

**14.** The ferrimagnetic material of claims 10 through 13, wherein:

the ferromagnetic resonance linewidth is smaller than 15 (Oe).

**15.** A non - reciprocal device having a central conductor, at least one magnet and at least one ferrimagnetic member with;

said central conductor and said ferrimagnetic member provided facing opposite each other;
said magnet provided to apply a DC magnetic field to said central conductor and said ferrimagnetic member; and
said ferrimagnetic member defined in any one of claims 10 through 14.

**16.** The non - reciprocal device of claim 15, wherein:

the absolute value of the intermodulation distortion is equal to or greater than 75 (dBc).

**17.** The non - reciprocal device of claim 15 or 16, which is a distributed constant type non - reciprocal device, a lumped constant type non - reciprocal device or a substrate type non - reciprocal device.

FIG.1

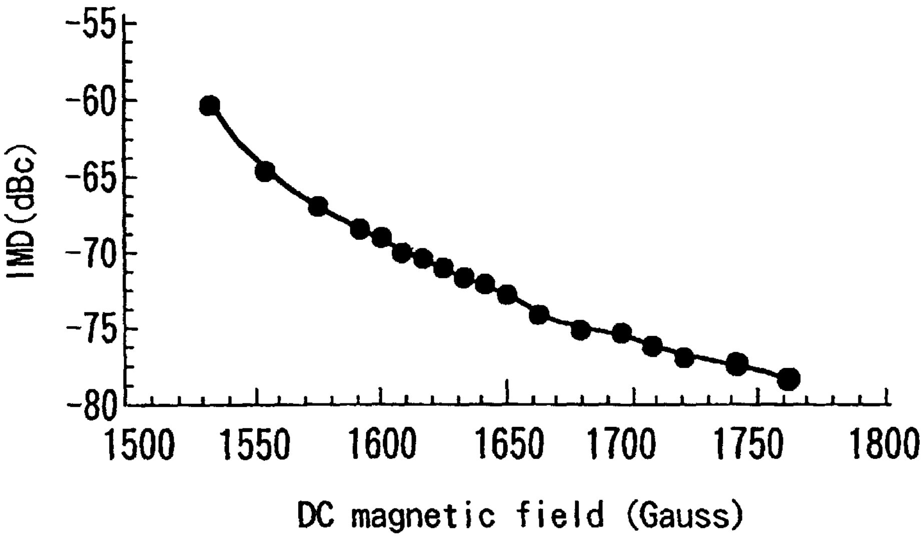
-55
-60
-65
-70
-75
-80
IMD(dBc)
1500
1550
1600
1650
1700
1750
1800
DC magnetic field (Gauss)

FIG.2

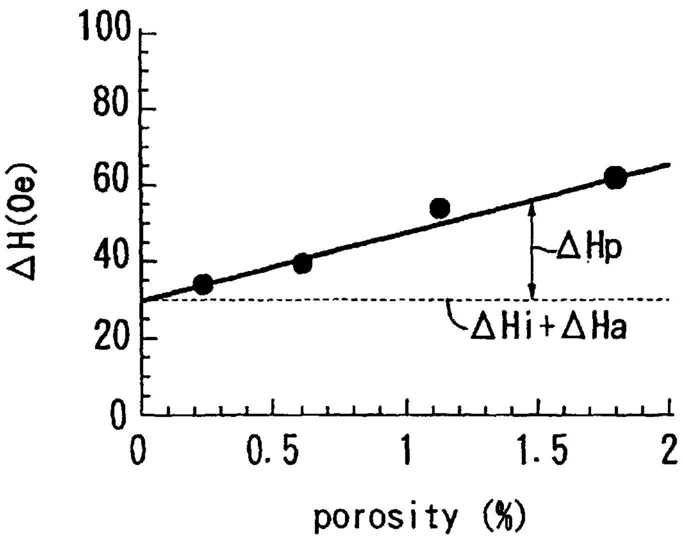
100
80
60
40
20
0
ΔH(Oe)
ΔHp
ΔHi+ΔHa
0
0.5
1
1.5
2
porosity (%)

# FIG.3

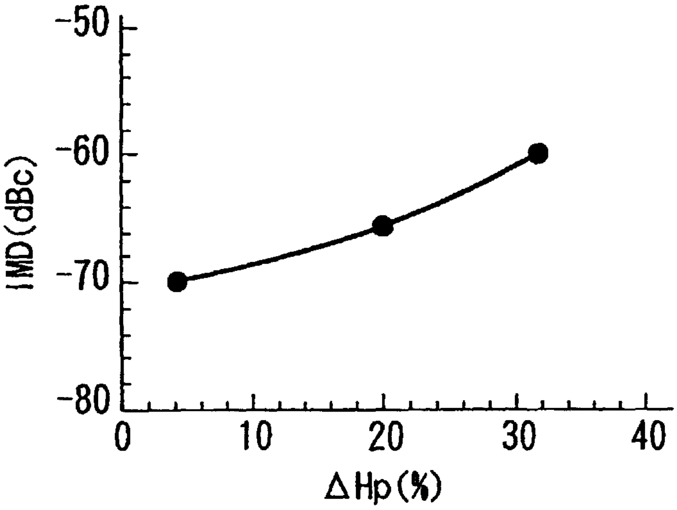
-50
-60
-70
-80
IMD(dBc)
0
10
20
30
40
ΔHp(%)

# FIG.4

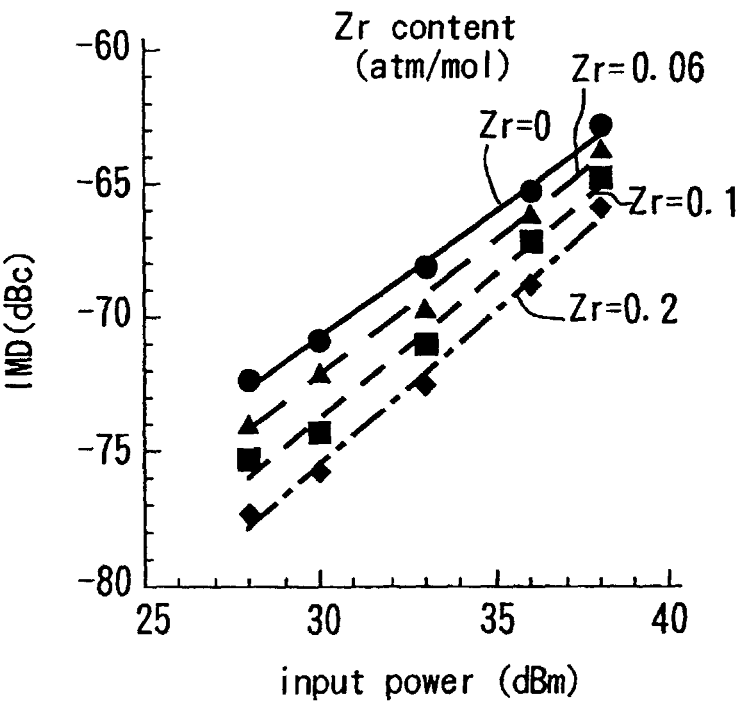
Zr content
(atm/mol)
Zr=0.06
Zr=0
Zr=0.1
Zr=0.2
-60
-65
-70
-75
-80
IMD(dBc)
25
30
35
40
input power (dBm)

# FIG.5

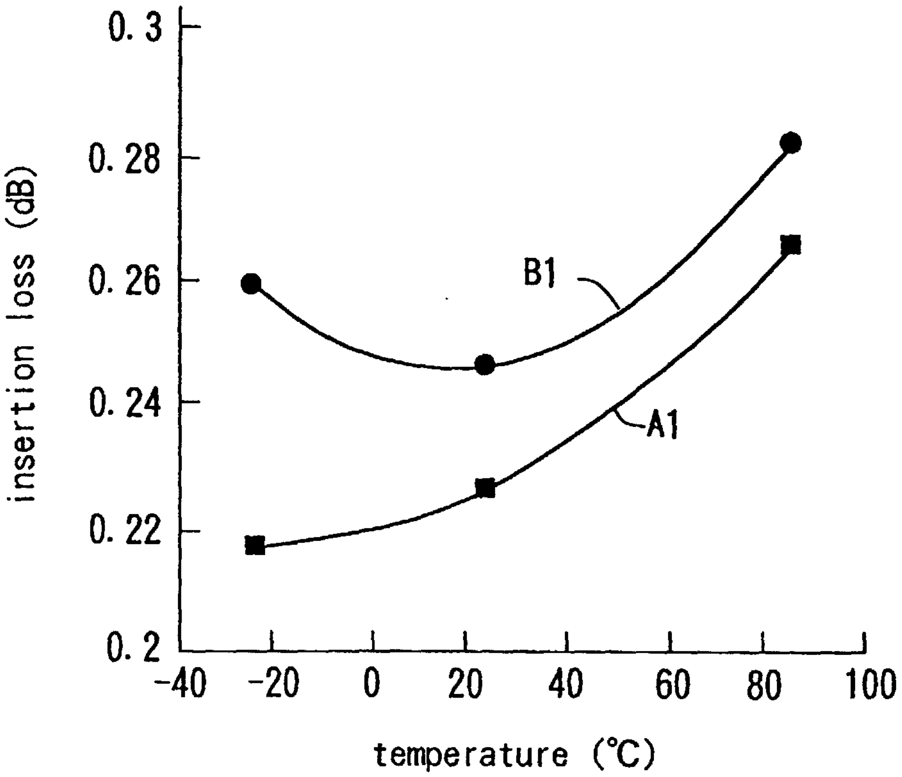
0. 3
0. 28
0. 26
0. 24
0. 22
0. 2
insertion loss (dB)
B1
A1
-40
-20
0
20
40
60
80
100
temperature (℃)

# FIG.6

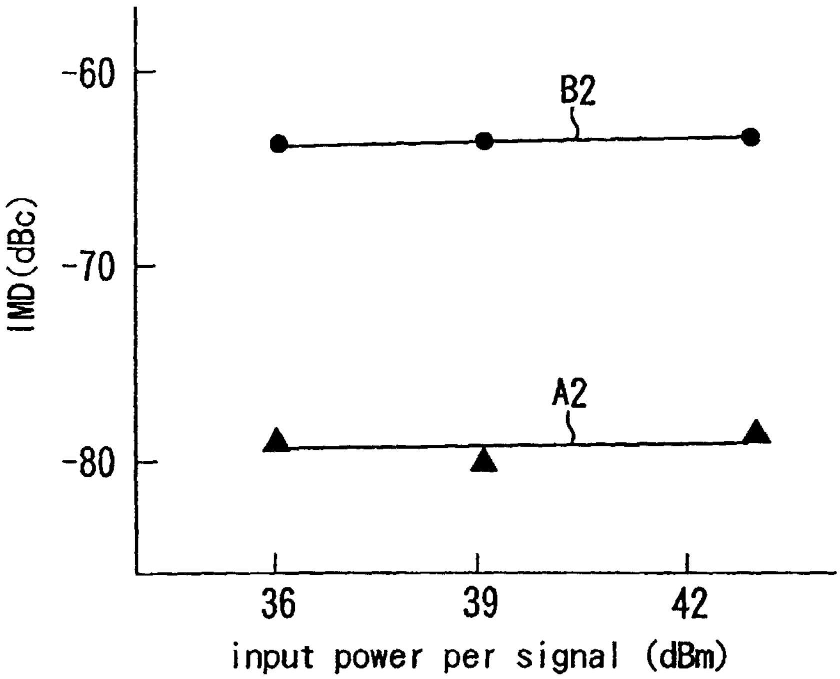

-60
-70
-80
IMD(dBc)
B2
A2
36
39
42
input power per signal (dBm)


# FIG.7

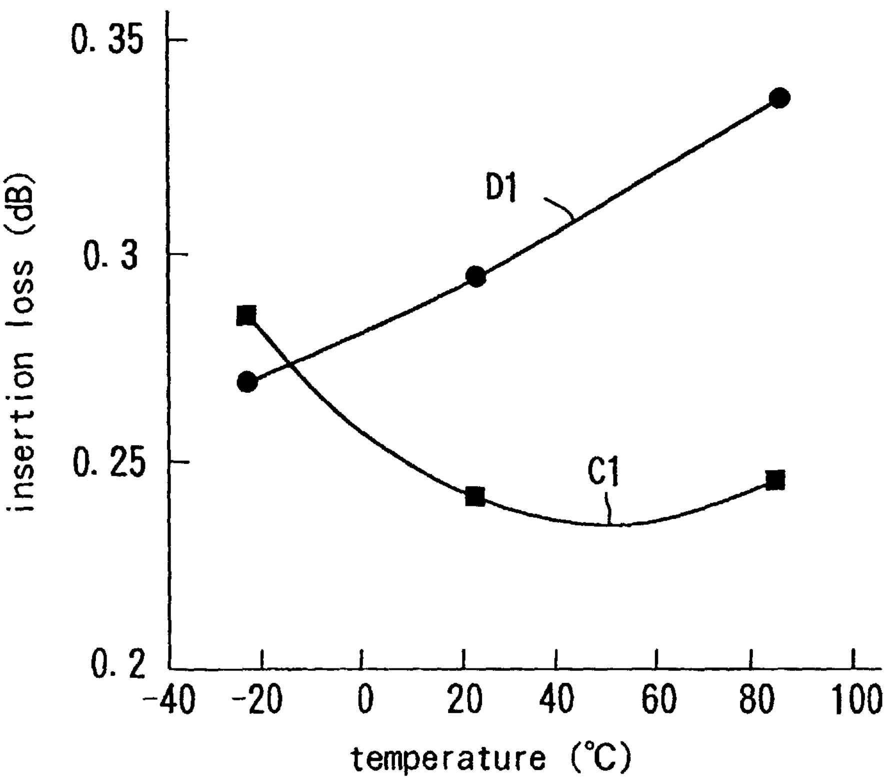

0. 35
0. 3
0. 25
0. 2
insertion loss (dB)
D1
C1
-40
-20
0
20
40
60
80
100
temperature (℃)

FIG.8

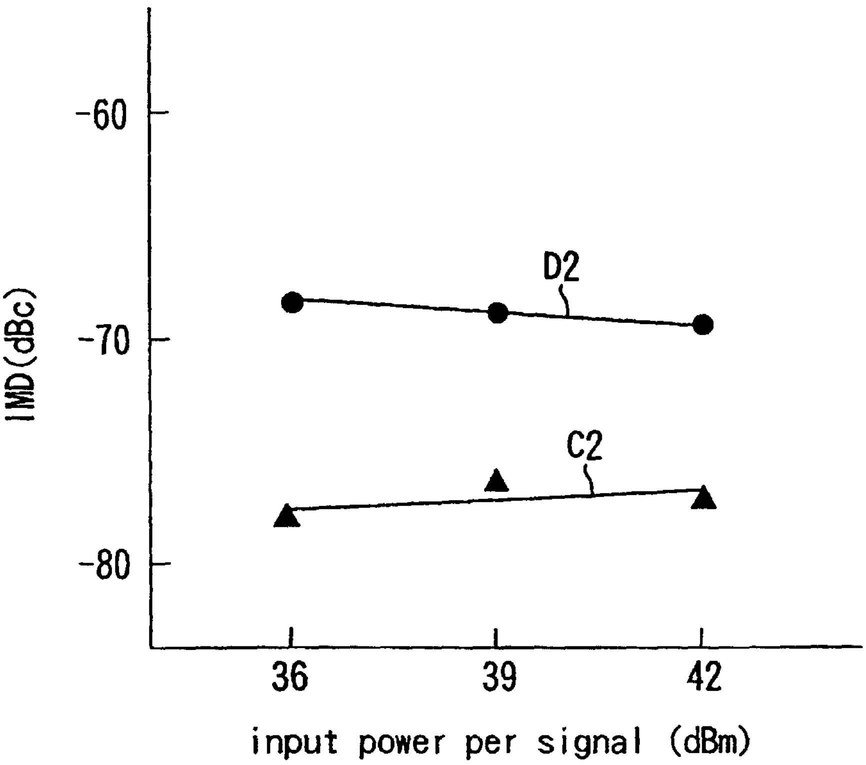

# FIG.9

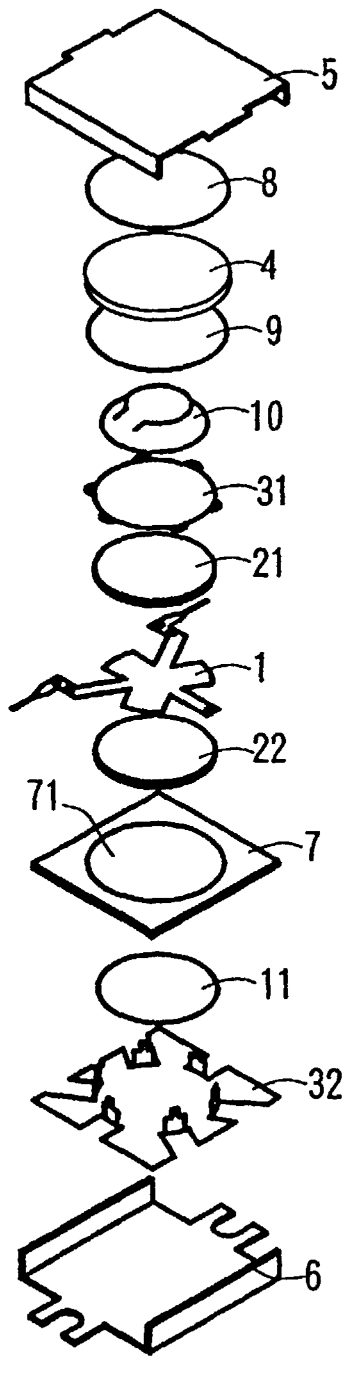

# FIG.10

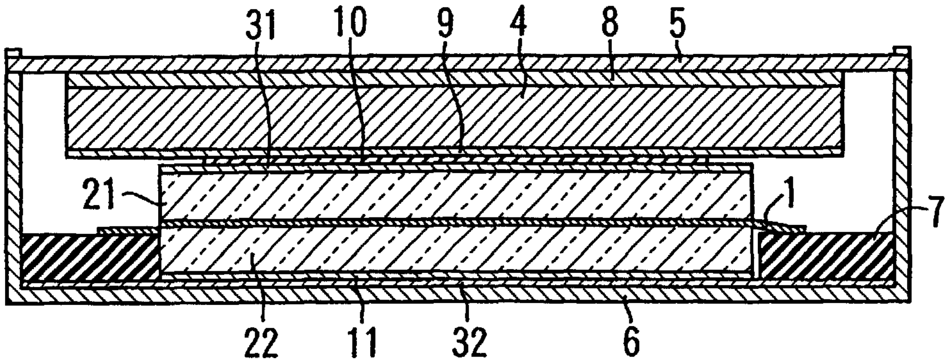


# FIG.11

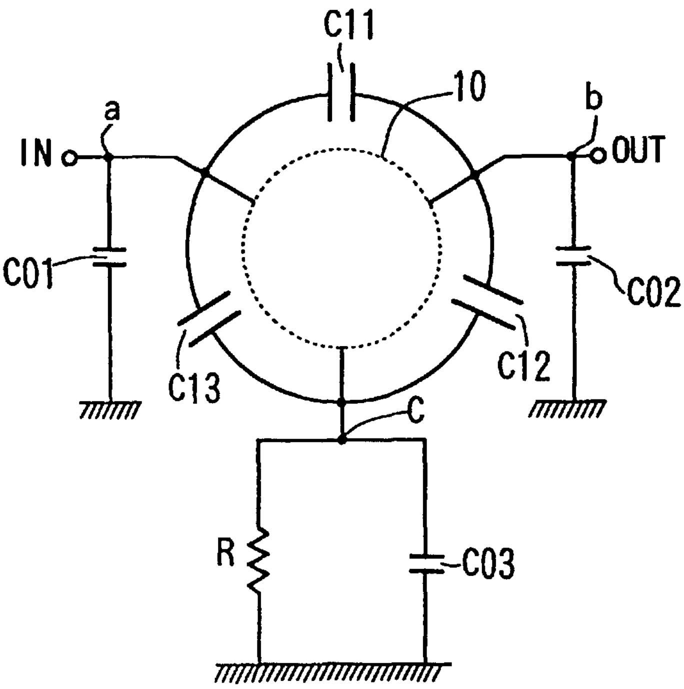

## INTERNATIONAL SEARCH REPORT

International application No.
PCT/JP99/01996

A. CLASSIFICATION OF SUBJECT MATTER
Int.Cl⁶ C01G49/00, C04B35/26, H01F1/34, H01P1/32

According to International Patent Classification (IPC) or to both national classification and IPC

B. FIELDS SEARCHED

Minimum documentation searched (classification system followed by classification symbols)
Int.Cl⁶ C01G49/00, C04B35/26, H01F1/34, H01P1/32

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P, X | Masako Gakuta, et al., "YIG ferrite no jiki tokusei to isolator no IMD tokusei tono soukan", Journal of the Applied Magnetics Association of Japan, Vol. 22, No. 4-2, (1998), p.673-676 | 1-17 |
| X | JP, 3-288406, A (Murata Mfg. Co., Ltd.),<br>18 December, 1991 (18. 12. 91)<br>& GB, 2243152, A | 1-5 |
| X | JP, 7-157313, A (Murata Mfg. Co., Ltd.),<br>20 June, 1995 (20. 06. 95) (Family: none) | 1-5 |
| X | JP, 8-288116, A (Matsushita Electric Industrial Co., Ltd.),<br>1 November, 1996 (01. 11. 96)<br>& EP, 737987, A1 | 1-5 |
| X | JP, 7-61821, A (Taiyo Yuden Co., Ltd.),<br>7 March, 1995 (07. 03. 95) (Family: none) | 1-5 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 5 July, 1999 (05. 07. 99) | 13 July, 1999 (13. 07. 99) |
| Name and mailing address of the ISA/<br>Japanese Patent Office | Authorized officer |
| Facsimile No. | Telephone No. |

Form PCT/ISA/210 (second sheet) (July 1992)